# FASCICULE DE BREVET EUROPEEN

(11) **EP 0 648 660 B1**
(45) Date de publication et mention de la délivrance du brevet: **18.04.2001**
(21) Numéro de dépôt: 94402307.6
(22) Date de dépôt: 14.10.1994
(51) Int. Cl.: B61J 3/12, B60F 1/04, B62D 49/00

(54) **Dispositif et procédé de propulsion et de manoeuvre de véhicules ferroviaires ou routiers**
Vorrichtung und Verfahren zum Antrieb und Bewegen von Schienen- oder Strassenfahrzeugen
Device and method for propulsion and manoeuvring of railway or road vehicles

(30) Priorité: 19.10.1993 FR 9312425
(43) Date de publication de la demande: 19.04.1995
(73) Titulaire: GEC ALSTHOM TRANSPORT SA, 75016 Paris (FR)
(72) Inventeur: Pissard, Gérard, F-17690 Angoulins (FR); Montaut, Bernard, F-17000 La Rochelle (FR); Bonnet, Jacky, F-17138 Puilboreau (FR); Layec, Jean-Michel, F-17220 La Jarrie (FR)
(74) Mandataire: Gosse, Michel

(56) Documents cités:
- BE-A- 671 663
- BE-A- 807 907
- DE-A- 2 312 530
- GB-A- 1 136 248

## Description

La présente invention porte sur les équipements permettant d'effectuer la manutention de véhicules ferroviaires, en général, et concerne, plus particulièrement, un dispositif et un procédé de propulsion et de manoeuvre de véhicules ferroviaires ou routiers.

Il est connu de la société allemande Rheiner Maschinenfabrik Windhoff AG des équipements de propulsion et de manoeuvre pour embranchements et postes de chargement ferroviaire.

Les figures la à le représentent des équipements de propulsion et de manoeuvre conformes à cet état de la technique.

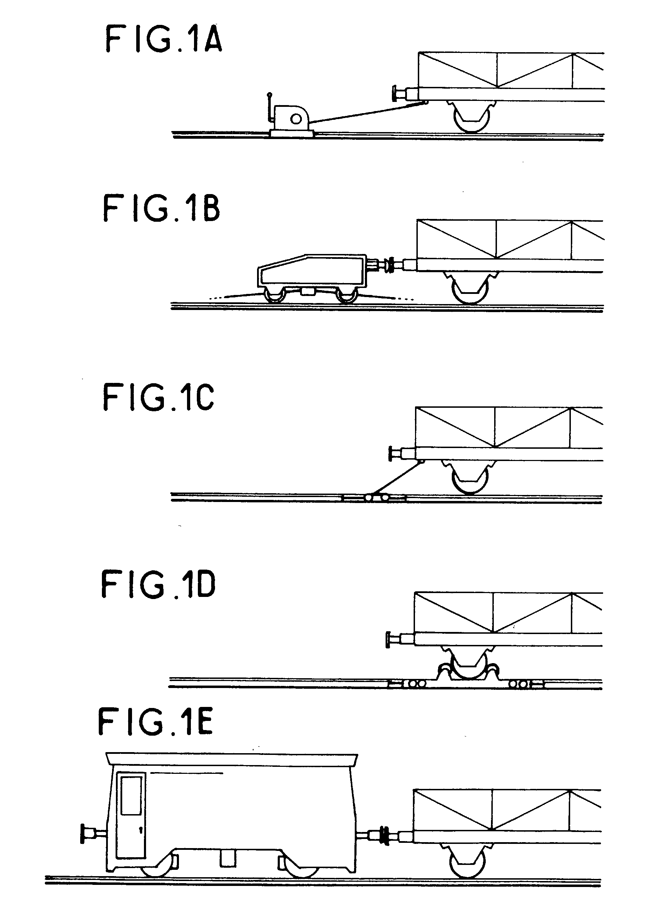

Un premier équipement de propulsion de l'état de la technique se compose d'un treuil à arbre vertical sur lequel s'enroule un câble servant à tirer un ou plusieurs véhicules ferroviaires. Cet équipement de traction avec treuil à câble ouvert permettant de manoeuvrer des véhicules ferroviaires est représenté à la figure 1a.

Un deuxième équipement de traction de l'état de la technique se compose d'un treuil réversible et d'un chariot à tampons permettant le chargement de matériaux en vrac. Un tel équipement de traction est représenté à la figure 1b.

Un troisième équipement de traction de l'état de la technique se compose d'un treuil réversible et d'un chariot de traction enterré dans le cas de rails enterrés. Un tel équipement de traction est représenté à la figure 1c.

Un quatrième équipement de traction de l'état de la technique se compose d'un treuil réversible et d'un chariot de traction en prise sur les essieux des roues du véhicule ferroviaire. Un tel équipement de traction est représenté à la figure 1d.

Un cinquième équipement de traction de l'état de la technique se compose d'un engin ferroviaire du type locotracteur. Un tel équipement de traction est représenté à la figure 1e.

Il est également connu de la société MANUCHAR des appareils de rangement de véhicules ferroviaires.

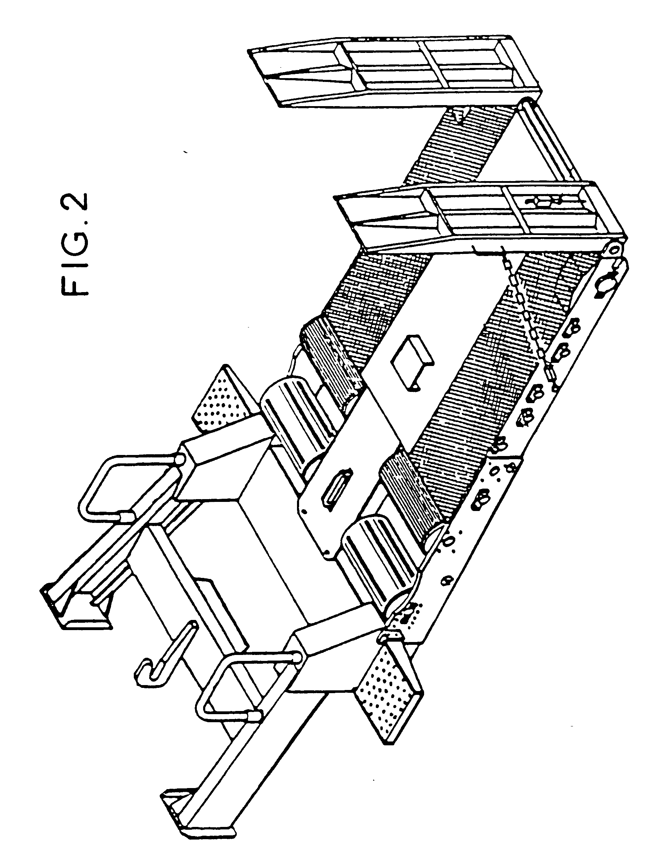

La figure 2 représente un appareil de rangement de véhicules ferroviaires conforme à cet état de la technique.

L'appareil de rangement de véhicules ferroviaires se compose d'une base mobile portée par plusieurs roues motrices entraînées par des rouleaux d'entraînement au moyen de chaînes. Le guidage sur la voie est assuré par des roues à flasque.

L'appareil de rangement de véhicules ferroviaires est déposé sur les rails au moyen d'un chariot élévateur. Le chariot élévateur est disposé sur la base de l'appareil de rangement. L'appareil de rangement se déplace au moyen du chariot élévateur par transmission du couple moteur fournit par le moteur du chariot sur les rouleaux d'entraînement par l'intermédiaire des roues motrices du chariot.

Le document BE-A-671 663 de l'art antérieur décrit un dispositif de propulsion et de manoeuvre de véhicules ferroviaires conforme au préambule de la revendication 1 ci-dessous.

Un inconvénient majeur des équipements permettant d'effectuer la manutention de véhicules ferroviaires de l'état de la technique est leur grande complexité débouchant sur de nombreuses interventions de maintenance.

Un autre inconvénient des équipements permettant d'effectuer la manutention de véhicules ferroviaires de l'état de la technique est leur coût trop élevé.

Un autre inconvénient des équipements permettant d'effectuer la manutention de véhicules ferroviaires de l'état de la technique est leur manque de flexibilité par exemple du fait de leur masse élevée.

Un autre inconvénient des équipements permettant d'effectuer la manutention de véhicules ferroviaires de l'état de la technique est l'utilisation d'un câble de traction ouvert.

Un autre inconvénient des équipements permettant d'effectuer la manutention de véhicules ferroviaires de l'état de la technique est que leur application est limitée au domaine ferroviaire.

Un but de l'invention est de concevoir un dispositif de traction et de manoeuvre de véhicules ferroviaires ou routiers facile à insérer entre deux véhicules et ne nécessitant pas l'utilisation d'un cable de traction, fonction impossible à obtenir avec les chariots de traction de l'art antérieur.

C'est le mérite de la demanderesse que de proposer un dispositif de propulsion et de manoeuvre de véhicules ferroviaires ou routiers réalisant cette fonction sans présenter les inconvénients des dispositifs de l'art antérieur.

Conformément à une caractéristique essentielle de l'invention, l'ensemble constitué par un véhicule ferroviaire ou routier et son dispositif de propulsion comporte:
- des moyens d'entraînement, fixés à une ossature et prenant appui au sol, susceptibles de tourner sous l'action de moyens de rotation moteurs de manière à appliquer un mouvement longitudinal à ladite ossature,
- des moyens de pression fixés libres de pivoter par une extrémité à ladite ossature et pouvant créer une adhérence sufffisante entre lesdits moyens d'entraînement, et ledit sol lorsqu'ils prennent appui par leur autre extrémité, et
- des moyens de maintien permettant de rendre ladite ossature solidaire dudit véhicule ferroviaire ou routier,
et se caractérise en ce que:
- lesdits moyens de pression sont fixés par leur autre extrémité directement à un premier élément dudit véhicule ferroviaire ou routier,
- lesdits moyens de maintien sont fixés à ladite ossature et coopèrent avec un second élément du véhicule ferroviaire ou routier, et
- ladite ossature est rendue solidaire dudit véhicule ferroviaire ou routier sous l'action combinée desdits moyens de maintien et desdits moyens de pression, à l'exclusion de tout autre moyen, l'action combinée des moyens de pression et des moyens de maintien permettant la création d'une adhérence suffisante entre lesdits moyens d'entraînement et le sol,

Conformément à d'autres caractéristiques de l'invention:
- les moyens d'entraînement fixés à l'ossature sont constitués d'au moins une roue motrice clavetée à l'extrémité d'un essieu et sont maintenus libre en rotation au moyens d'un premier jeu de paliers solidaires de l'ossature maintenant l'essieu en rotation, une première roue dentée étant solidaire de l'essieu et étant associée à une seconde roue dentée entraînée en rotation par ledit moyen de rotation moteur;
- les moyens de rotation moteurs sont constitués d'un moteur pneumatique fixé à l'ossature et équipé d'un frein actif lorsque la pression est nulle, ledit moyen de rotation moteur entraînant en rotation ladite seconde roue dentée au moyen d'un ensemble à embrayage à denture commandé pneumatiquement et d'un réducteur à engrenage cylindrique, ladite seconde roue dentée étant maintenue libre en rotation au moyens d'un second jeu de paliers solidaires de l'ossature et ledit réducteur à engrenage cylindrique étant couplé au moteur pneumatique au moyen d'un accouplement flexible;
- les moyens de pression sont constitués d'un vérin pneumatique fixé libre de pivoter par l'une de ses extrémités à l'ossature et par l'autre extrémité au premier élément du véhicule ferroviaire ou routier, ledit vérin coopèrant avec le premier élément du véhicule ferroviaire ou routier de manière à lui appliquer une force dirigée de telle manière que la force résultante appliquée sur le sol par les roues motrices soit au mieux perpendiculaire au plan défini par le sol;
- l'extrémité du vérin fixée à l'ossature est solidaire de ladite ossature selon différentes positions longitudinales par l'intermédiaire d'un support multiposition disposé longitudinalement de manière à pouvoir s'adapter aux différentes position du premier élément du véhicule ferroviaire ou routier de manière à définir une force résultante satisfaisante appliquée sur le sol par les roues motrices;
- les moyens de maintien, fixés à l'ossature et coopèrant avec un second élément du véhicule ferroviaire ou routier, sont constitués d'au moins un crochet de maintien fixé à l'extrémité de l'ossature; et
- les moyens de guidage sont constitués de deux roulettes escamotables.

Conformément à une caractéristique du procédé de propulsion et de manoeuvre de véhicules ferroviaires ou routiers de l'invention, ce dernier se caractérise par:
- la mise en place manuelle du dispositif de propulsion et de manoeuvre au moyen d'un timon télescopique et d'une roue pivotante solidaire et au centre de l'ossature, le dispositif de propulsion et de manoeuvre étant en position débrayée, de manière à disposer ce dernier à proximité du véhicule à déplacer;
- l'accrochage du dispositif de propulsion et de manoeuvre audit véhicule en basculant ledit dispositif vers l'avant en direction dudit véhicule de manière à rendre solidaire les moyens de maintien audit second élément;
- la mise en place des roulettes de guidage escamotables;
- la fixation de l'extrémité libre du vérin pneumatique au bras d'accrochage;
- le branchement de l'alimentation pneumatique du moteur, du vérin et de l'embrayage pneumatiques; et
- la commande du moteur, du vérin et de l'embrayage pneumatiques au moyen d'un distributeur pneumatique.

Le dispositif et le procédé de propulsion et de manoeuvre de véhicules ferroviaires ou routiers selon, respectivement, un autre mode de réalisation et un autre mode de mise en oeuvre, sont également tels que caractérisés dans les revendications ci-dessous non reprises ici.

Un avantage du dispositif de propulsion et de manoeuvre conforme à l'invention est son faible coût, dans un rapport de l'ordre de cinq à dix par rapport au coût des équipements de l'art antérieur.

Un autre avantage du dispositif de propulsion et de manoeuvre conforme à l'invention est qu'il est flexible du fait de son faible encombrement, de son utilisation facile et de son faible poids.

Un autre avantage du dispositif de propulsion et de manoeuvre conforme à l'invention est qu'il est non polluant et anti-déflagrant.

Un autre avantage du dispositif de propulsion et de manoeuvre conforme à l'invention est qu'il s'adapte à tous les types de bogie.

Un autre avantage du dispositif de propulsion et de manoeuvre conforme à l'invention est son application dans d'autres domaines que le domaine ferroviaire du fait qu'il s'adapte à tout véhicule ferroviaire ou routier.

Un autre avantage du dispositif de propulsion et de manoeuvre conforme à l'invention est son démarrage souple et progressif.

Un autre avantage du dispositif de propulsion et de manoeuvre conforme à l'invention est qu'il est susceptible d'être utilisé en marche avant comme en marche arrière.

Un autre avantage du dispositif de propulsion et de manoeuvre conforme à l'invention est qu'il peut être déplacé facilement par un seul opérateur.

D'autres buts, caractéristiques et avantages du dispositif de propulsion et de manoeuvre selon l'invention apparaîtrons à la lecture de la description suivante faite en liaison avec les dessins dans lesquels:
- les figures 1a à 1e et 2 représentent des équipements de l'art antérieur permettant d'effectuer la manutention de véhicules ferroviaires;
- la figure 3 est une vue de face en coupe du dispositif de propulsion et de manoeuvre de véhicules ferroviaires ou routiers conforme à un premier mode de réalisation préféré de l'invention;
- la figure 4 est une vue latérale du dispositif de propulsion et de manoeuvre représenté à la figure 3; et
- la figure 5 est une vue de dessus en coupe du dispositif de propulsion et de manoeuvre représenté à la figure 3;
- la figure 6 est une vue de face en coupe du dispositif de propulsion et de manoeuvre de véhicules ferroviaires ou routiers conforme à un second mode de réalisation préféré de l'invention;
- la figure 7 est une vue latérale du dispositif de propulsion et de manoeuvre représenté à la figure 6; et
- la figure 8 est une vue de dessus en coupe du dispositif de propulsion et de manoeuvre représenté à la figure 6.

Le dispositif de propulsion et de manoeuvre du premier mode de réalisation préféré se compose essentiellement de moyens d'entraînement 1, de moyens de pression 5 et de moyens de maintien 7.

Les moyens d'entraînement 1 sont fixés à une ossature 2 et prennent appui au sol 3. Ces moyens d'entraînement 1 sont susceptibles de tourner sous l'action de moyens de rotation moteurs 4 de manière à appliquer un mouvement longitudinal à l'ossature 2.

Les moyens de pression 5 sont fixés pivotants à l'ossature 2 et coopèrent avec un premier élément 6 du véhicule ferroviaire ou routier de manière à permettre une adhérence sufffisante entre les moyens d'entraînement 1 et le sol 3.

Les moyens de maintien 7 sont fixés à l'ossature 2 et coopèrent avec un second élément 8 du véhicule ferroviaire ou routier de manière à rendre l'ossature 2 solidaire du véhicule ferroviaire ou routier.

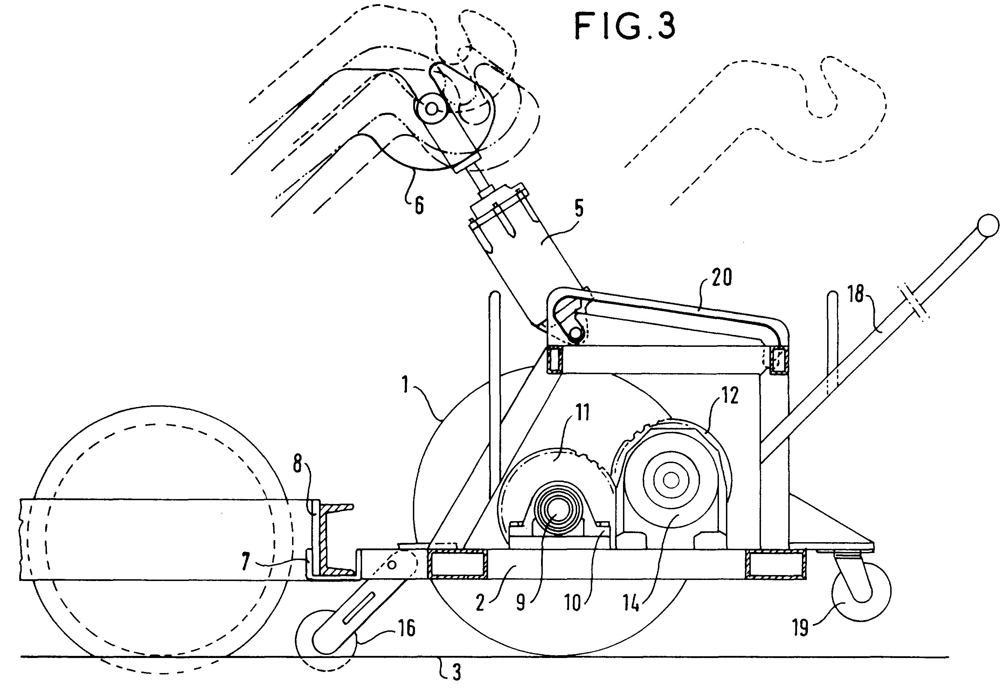

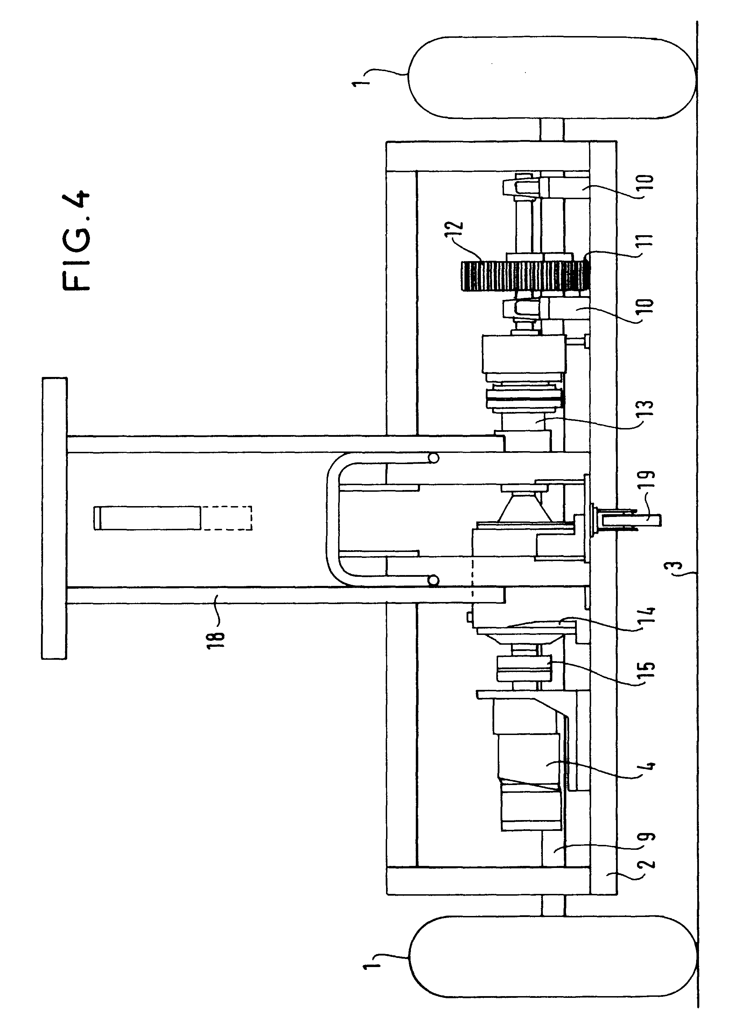

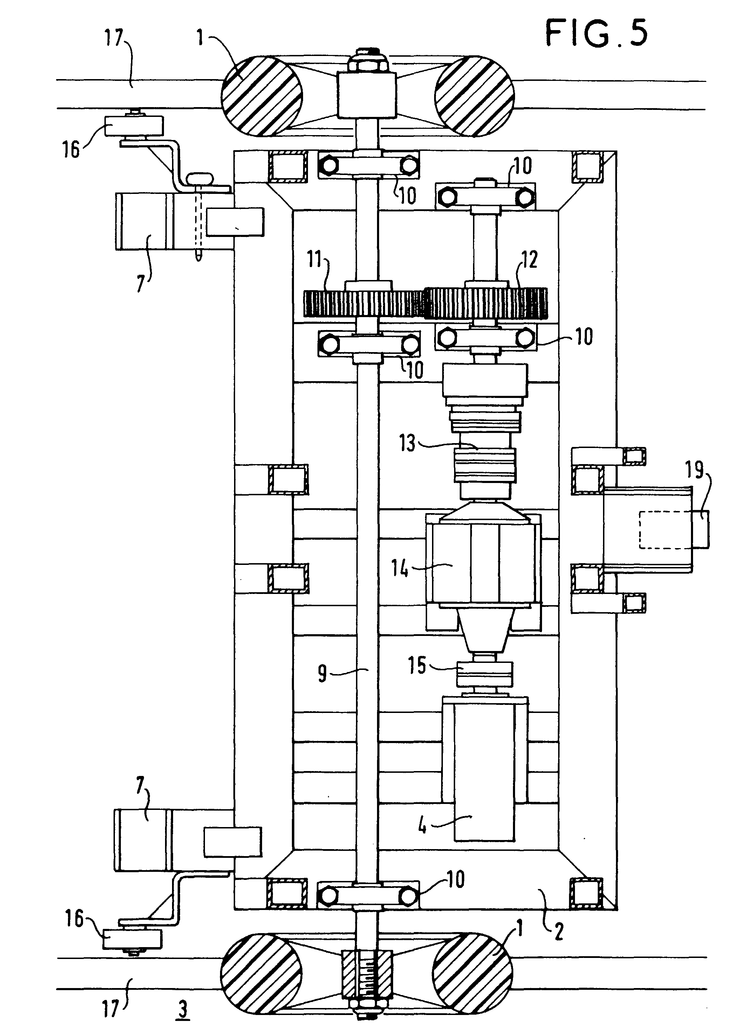

Conformément au mode de réalisation préféré du dispositif de propulsion et de manoeuvre représenté aux figures 3 à 5, les moyens d'entraînement 1 fixés à l'ossature 2 sont constitués de deux roues motrices à bandages pneumatiques clavetées à l'extrémité d'un essieu 9. Ces moyens d'entraînement 1 sont maintenus libre en rotation au moyens d'un premier jeu de trois paliers 10 maintenant l'essieu 9 en rotation et solidaires de l'ossature 2.

Une première roue dentée 11 est solidaire de l'essieu 9 et est associée à une seconde roue dentée 12 entraînée en rotation par le moyen de rotation moteur 4. Le rapport d'engrenage des roues dentées est par exemple de 1.

Les moyens de rotation moteurs 4 sont constitués d'un moteur pneumatique, par exemple de 2,05 kW à 270 tr/mn, équipé d'un frein actif lorsque la pression est nulle. Ces moyens de rotation moteurs 4 sont fixés à l'ossature 2.

La seconde roue dentée 12 est entraînée en rotation par le moyen de rotation moteur 4 au moyen d'un ensemble à embrayage 13 à denture commandé pneumatiquement et d'un réducteur 14 à engrenage cylindrique. Cette seconde roue dentée 12 est maintenue libre en rotation au moyens d'un second jeu de deux paliers 10 solidaires de l'ossature 2.

Le réducteur 14 à engrenage cylindrique est couplé au moteur pneumatique au moyen d'un accouplement flexible 15.

Les moyens de pression 5 fixés pivotants à l'ossature 2 sont constitués d'un vérin pneumatique. Ce vérin est fixé libre par l'une de ses extrémités à l'ossature et par l'autre extrémité au premier élément 6 du véhicule ferroviaire ou routier.

Ce vérin coopère avec le premier élément 6 du véhicule ferroviaire ou routier de manière à lui appliquer une force dirigée de telle manière que la force résultante appliquée sur le sol par les roues motrices soit au mieux perpendiculaire au plan défini par le sol. En d'autre termes, la force appliquée au premier élément 6 du véhicule ferroviaire ou routier est telle qu'elle permet une adhérence sufffisante entre les moyens d'entraînement 1 et le sol 3.

Différentes positions du premier élément 6 du véhicule ferroviaire ou routier sont représentées à la figure 3. Telle que représentée, l'extrémité du vérin fixée à l'ossature est solidaire de l'ossature par l'intermédiaire d'un support multiposition 20 disposé longitudinalement par rapport à la voie. L'extrémité du vérin peut donc être fixée sur ce support multiposition selon différentes positions longitudinales de manière à pouvoir s'adapter aux différentes position du premier élément 6 du véhicule ferroviaire ou routier. Un effet technique important est la possibilité de définir une force résultante satisfaisante appliquée sur le sol par les roues motrices.

Les moyens de maintien 7, fixés à l'ossature 2 et coopèrant avec un second élément 8 du véhicule ferroviaire ou routier, sont constitués de deux crochets de maintien en forme de U. Ces crochets sont fixés à l'extrémité de l'ossature en partie basse.

A titre d'exemple dans le domaine ferroviaire, le premier élément 6 du véhicule ferroviaire est un bras d'accrochage du bogie de manutention du véhicule et le second élément 8 du véhicule ferroviaire est la traverse de ce même bogie de manutention.

De manière à compléter le mode de réalisation proposé, le dispositif de propulsion et de manoeuvre peut comporter des moyens de guidage 16 coopérant avec les rails 17 de manière à guider le dispositif de propulsion et de manoeuvre dans les profils de rails.

Les moyens de guidage 16 sont constitués de deux roulettes escamotables disposées chacune proche d'un rail.

Le déplacement manuel du dispositif de propulsion et de manoeuvre est effectué par un timon télescopique 18 et une roue pivotante 19 solidaire et au centre de l'ossature.

La mise en place du dispositif de propulsion et de manoeuvre se fait manuellement. Le dispositif de propulsion et de manoeuvre étant en position débrayée, ce dernier est disposé sur la voie et rapproché du véhicule à déplacer.

L'accrochage du dispositif de propulsion et de manoeuvre au véhicule est effectué en basculant le dispositif vers l'avant en direction du véhicule de manière à disposer les deux crochets de maintien sous la traverse du bogie de manutention.

Les roulettes de guidage escamotables sont mises en place à proximité de leur rail respectif.

L'extrémité libre du vérin pneumatique est fixée au bras d'accrochage du bogie de manutention du véhicule.

Les branchements pneumatiques pour l'alimentation du moteur, du vérin et de l'embrayage pneumatiques sont effectués.

La commande du moteur, du vérin et de l'embrayage pneumatiques est effectuée au moyen d'un distributeur pneumatique de l'art antérieur.

Il va de soit que conformément au mode de réalisation préféré de l'invention, le dispositif de propulsion et de manoeuvre permet un déplacement en traction ou en propulsion du véhicule.

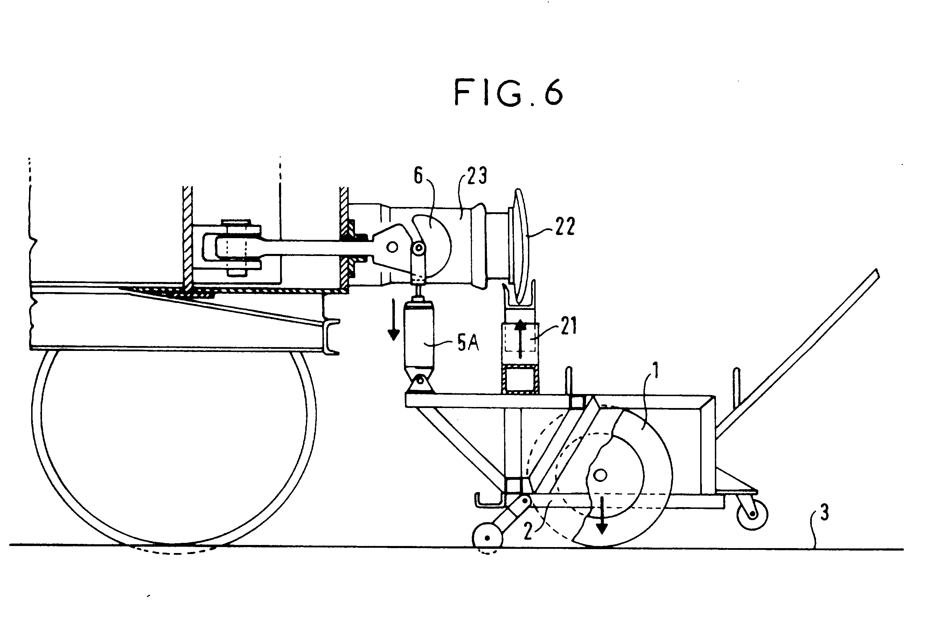

La figure 6 est une vue de face en coupe du dispositif de propulsion et de manoeuvre de véhicules ferroviaires ou routiers conforme à un second mode de réalisation préféré de l'invention.

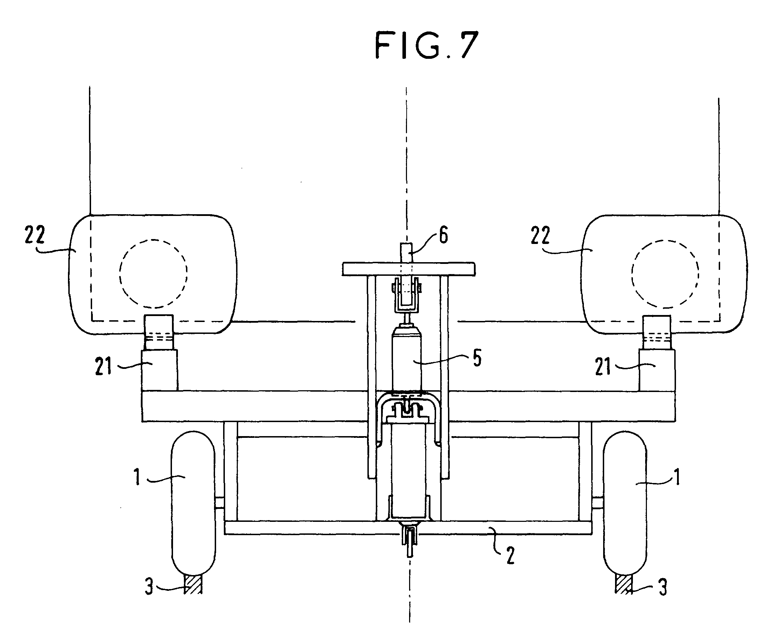

La figure 7 est une vue latérale du dispositif de propulsion et de manoeuvre représenté à la figure 6.

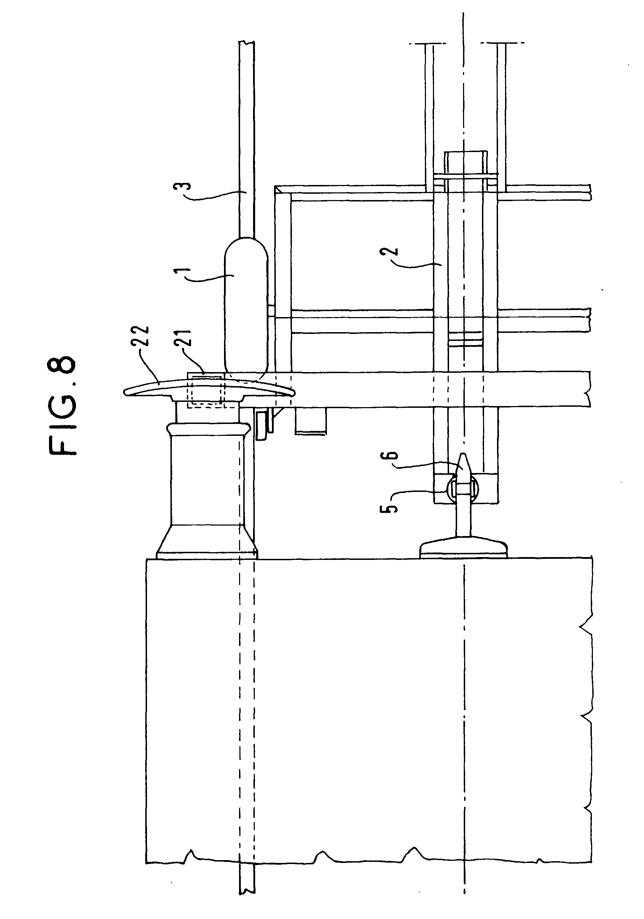

La figure 8 est une vue de dessus en coupe du dispositif de propulsion et de manoeuvre représenté à la figure 6.

Le dispositif de propulsion et de manoeuvre du second mode de réalisation préféré représenté aux figures 6 à 8 se compose essentiellement de moyens d'entraînement 1, de premiers moyens de pression 5 et de seconds moyens de pression 21.

Les moyens d'entraînement 1 sont fixés à une ossature 2 et prennent appui au sol 3. Ces moyens d'entraînement 1 sont susceptibles de tourner sous l'action de moyens de rotation moteurs 4 de manière à appliquer un mouvement longitudinal à l'ossature 2.

Les premiers moyens de pression 5 sont fixés pivotants à l'ossature 2 et coopèrent avec un premier élément 6 du véhicule ferroviaire ou routier de manière à permettre une adhérence sufffisante entre les moyens d'entraînement 1 et le sol 3.

Les second moyens de pression 21 sont fixés à l'ossature 2 et coopèrent avec des troisièmes éléments 22 du véhicule ferroviaire ou routier de manière à rendre l'ossature 2 solidaire du véhicule ferroviaire ou routier.

Les premiers moyens de pression 5 fixés pivotants à l'ossature 2 sont constitués d'un premier vérin pneumatique. Ce premier vérin est fixé libre par l'une de ses extrémités à l'ossature et par l'autre extrémité au premier élément 6 du véhicule ferroviaire ou routier.

Les second moyens de pression 21, fixés à l'ossature 2 et coopèrant avec des troisièmes éléments 22 du véhicule ferroviaire ou routier, sont constitués d'un second et d'un troisième vérins pneumatiques dont l'une des extrémités se compose de deux crochets de maintien en forme de U.

Les second et troisième vérins pneumatiques sont disposés de part et d'autre et en avant du premier vérin pneumatique.

A titre d'exemple dans le domaine ferroviaire, le premier élément 6 du véhicule ferroviaire est un bras d'accrochage du bogie de manutention du véhicule et les troisièmes éléments 22 du véhicule ferroviaire est le tampon des moyens d'absorbsion 23 du véhicule ferroviaire ou routier.

Le premier vérin coopère avec le premier élément 6 du véhicule ferroviaire ou routier et le second vérin coopère avec les troisièmes éléments 22 du véhicule ferroviaire ou routier.

Les premiers et les seconds vérins sont associés de manière à appliquer, respectivement, au premier élément 6 et aux troisièmes éléments 22 des forces dirigées de telle manière que la force résultante appliquée sur le sol par les roues motrices soit au mieux perpendiculaire au plan défini par le sol. En d'autre termes, les forces appliquées, respectivement, au premier élément 6 et aux troisièmes éléments 22 du véhicule ferroviaire ou routier sont telles qu'elles permettent une adhérence sufffisante entre les moyens d'entraînement 1 et le sol 3.

L'accrochage du dispositif de propulsion et de manoeuvre au véhicule est effectué en insérant le dispositif sous le véhicule puis en disposant les crochets de maintien sous les troisièmes éléments du véhicule ferroviaire ou routier.

## Revendications

1. Ensemble constitué par un véhicule ferroviaire ou routier et son dispositif de propulsion comportant:
- des moyens d'entraînement (1), fixés à une ossature (2) et prenant appui au sol (3), susceptibles de tourner sous l'action de moyens de rotation moteurs (4) de manière à appliquer un mouvement longitudinal à ladite ossature,
- des moyens de pression (5) fixés libres de pivoter par une extrémité à ladite ossature (2) et pouvant créer une adhérence sufffisante entre lesdits moyens d'entraînement et ledit sol lorsqu'ils prennent appui par leur autre extrémité, et
- des moyens de maintien (7) permettant de rendre ladite ossature solidaire dudit véhicule ferroviaire ou routier,
caractérisé en ce que:
- lesdits moyens de pression (5) sont fixés par leur autre extrémité directement à un premier élément (6) dudit véhicule ferroviaire ou routier,
- lesdits moyens de maintien (7) sont fixés à ladite ossature (2) et coopèrent avec un second élément (8) du véhicule ferroviaire ou routier, et
- ladite ossature (2) est rendue solidaire dudit véhicule ferroviaire ou routier sous l'action combinée desdits moyens de maintien (7) et desdits moyens de pression (5), à l'exclusion de tout autre moyen, l'action combinée des moyens de pression (5) et des moyens de maintien (7) permettant la création d'une adhérence suffisante entre lesdits moyens d'entraînement et le sol.

2. Ensemble selon la revendication 1 dans lequel les moyens d'entraînement (1) fixés à l'ossature (2) sont constitués d'au moins une roue motrice clavetée à l'extrémité d'un essieu (9) et sont maintenus libre en rotation au moyens d'un premier jeu de paliers (10) solidaires de l'ossature (2) maintenant l'essieu (9) en rotation, une première roue dentée (11) étant solidaire de l'essieu (9) et étant associée à une seconde roue dentée (12) entraînée en rotation par ledit moyen de rotation moteur (4).

3. Ensemble selon l'une quelconque des revendications 1 et 2 dans lequel les moyens de rotation moteurs (4) sont constitués d'un moteur pneumatique fixé à l'ossature (2) et équipé d'un frein actif lorsque la pression est nulle, ledit moyen de rotation moteur (4) entraînant en rotation ladite seconde roue dentée (12) au moyen d'un ensemble à embrayage (13) à denture commandé pneumatiquement et d'un réducteur (14) à engrenage cylindrique, ladite seconde roue dentée (12) étant maintenue libre en rotation au moyens d'un second jeu de paliers (10) solidaires de l'ossature (2) et ledit réducteur (14) à engrenage cylindrique étant couplé au moteur pneumatique au moyen d'un accouplement flexible (15).

4. Ensemble selon l'une quelconque des revendications 1 à 3 dans lequel les moyens de pression (5) sont constitués d'un vérin pneumatique fixé libre de pivoter par l'une de ses extrémités à l'ossature (2) et par l'autre extrémité au premier élément (6) du véhicule ferroviaire ou routier, ledit vérin coopèrant avec le premier élément (6) du véhicule ferroviaire ou routier de manière à lui appliquer une force dirigée de telle manière que la force résultante appliquée sur le sol par les roues motrices soit au mieux perpendiculaire au plan défini par le sol.

5. Ensemble selon l'une quelconque des revendications 1 à 4 dans lequel l'extrémité du vérin fixée à l'ossature est solidaire de ladite ossature selon différentes positions longitudinales par l'intermédiaire d'un support multiposition (20) disposé longitudinalement de manière à pouvoir s'adapter aux différentes position du premier élément (6) du véhicule ferroviaire ou routier de manière à définir une force résultante satisfaisante appliquée sur le sol par les roues motrices.

6. Ensemble selon l'une quelconque des revendications 1 à 5 dans lequel les moyens de maintien (7), fixés à l'ossature (2) et coopérant avec un second élément (8) du véhicule ferroviaire ou routier, sont constitués d'au moins un crochet de maintien fixé à l'extrémité de l'ossature.

7. Ensemble selon l'une quelconque des revendications 1 à 6 dans lequel les moyens de guidage (16) sont constitués de deux roulettes escamotables.

8. Procédé utilisant un ensemble selon les revendications 1 à 7 caractérisé par:
- la mise en place manuelle du dispositif de propulsion et de manoeuvre au moyen d'un timon télescopique (18) et d'une roue pivotante (19) solidaire de l'ossature, le dispositif de propulsion et de manoeuvre étant en position débrayée, de manière à disposer ce dernier à proximité du véhicule à déplacer;
- l'accrochage du dispositif de propulsion et de manoeuvre audit véhicule en basculant ledit dispositif vers l'avant en direction dudit véhicule de manière à rendre solidaire les moyens de maintien (7) audit second élément (8);
- la mise en place des roulettes de guidage escamotables;
- la fixation de l'extrémité libre du vérin pneumatique au bras d'accrochage;
- le branchement de l'alimentation pneumatique du moteur, du vérin et de l'embrayage pneumatiques; et
- la commande du moteur, du vérin et de l'embrayage pneumatiques au moyen d'un distributeur pneumatique.

9. Ensemble constitué par un véhicule ferroviaire ou routiers et son dispositif de propulsion comportant:
- des moyens d'entraînement (1), fixés à une ossature (2) et prenant appui au sol (3), susceptibles de tourner sous l'action de moyens de rotation moteurs (4) de manière à appliquer un mouvement longitudinal à ladite ossature;
- des moyens de pression (5A) fixés pivotants à ladite ossature et coopérant avec un premier élément (6) dudit véhicule ferroviaire ou routier de manière à permettre une adhérence sufffisante entre lesdits moyens d'entraînement et ledit sol; et
- des moyens de pression supplementaires (21) coopérant avec des troisièmes éléments (22) dudit véhicule ferroviaire ou routier de manière à rendre ladite ossature solidaire dudit véhicule ferroviaire ou routier,
caractérisé en ce que lesdits moyens de pression supplementaires (21) sont fixés à ladite ossature, l'action combinée des moyens de pression (5A) et des moyens de pression supplementaires (21) permettant la création d'une adhérence suffisante entre lesdits moyens d'entraînement et le sol.

10. Ensemble selon la revendication 9 dans lequel le prmier moyen de pression (5) est constitué d'un premier vérin, les seconds moyens de pression (21) sont constitués d'un second et d'un troisième vérins dont l'une des extrémités se compose des crochets de maintien, lesdits second et troisième vérins pneumatiques étant disposés de part et d'autre et en avant du premier vérin, lesdits premiers et seconds vérins étant associés de manière à appliquer, respectivement, audit premier élément 6 et auxdits troisièmes éléments 22 des forces dirigées de telle manière que la force résultante appliquée sur le sol par les roues motrices soit au mieux perpendiculaire au plan défini par le sol.

11. Procédé utilisant un ensemble selon les revendications 9 ou 10 caractérisé par:
- la mise en place manuelle du dispositif de propulsion et de manoeuvre au moyen d'un timon télescopique (18) et d'une roue pivotante (19) solidaire de l'ossature, le dispositif de propulsion et de manoeuvre étant en position débrayée, de manière à disposer ce dernier à proximité du véhicule à déplacer;
- l'accrochage du dispositif de propulsion et de manoeuvre audit véhicule en insérant ledit dispositif sous le véhicule,
- la mise en place de roulettes de guidage escamotables;
- la fixation de l'extrémité libre des moyens de pression au bras d'accrochage;
- la fixation des moyens de pression supplémentaires sous les troisièmes éléments du véhicule ferroviaire ou routier,
- le branchement de l'alimentation pneumatique du moteur, des moyens de pression et de l'embrayage pneumatiques; et
- la commande du moteur, des moyens de pression et de l'embrayage pneumatiques au moyen d'un distributeur pneumatique.

## Patentansprüche

1. Anordnung, gebildet durch ein Schienen- oder Straßenfahrzeug und eine Antriebsvorrichtung dafür, mit:
- Mitnahmemitteln (1), die an einem Gerüst (2) befestigt sind und am Boden (3) abgestützt sind, die unter der Einwirkung von Motor-Drehmitteln (4) drehbar sind, um eine Längsbewegung des Gerüsts herbeizuführen,
- Druckmitteln (5), die an einem Ende schwenkbar an dem Gerüst (2) befestigt sind und eine ausreichende Haftung zwischen den Mitnahmemitteln und dem Boden herbeiführen können, wenn sie mit ihrem anderen Ende Last aufnehmen, und
- Haltemitteln (7), die es erlauben, das Gerüst mit dem Schienen- oder Straßenfahrzeug fest zu verbinden,
dadurch gekennzeichnet, dass:
- die Druckmittel (5) mit ihrem anderen Ende direkt an einem ersten Element (6) des Schienen- oder Straßenfahrzeugs befestigt sind,
- die Haltemittel (7) an dem Gerüst (2) befestigt sind und mit einem zweiten Element (8) des Schienen- oder Straßenfahrzeugs zusammenwirken, und
- das Gerüst (2) mit dem Schienen- oder Straßenfahrzeug unter der kombinierten Wirkung der Haltemittel (7) und der Druckmittel (5) unter Ausschluss jedes anderen Mittels fest verbunden ist, wobei die kombinierte Wirkung der Druckmittel (5) und der Haltemittel (7) die Erzeugung einer ausreichenden Haftung zwischen den Mitnahmemitteln und dem Boden ermöglicht.

2. Anordnung nach Anspruch 1, bei der die an dem Gerüst (2) befestigten Mitnahmemittel (1) durch wenigstens ein am Ende einer Achse (9) festgekeiltes Antriebsrad gebildet sind und mit Hilfe eines ersten Satzes von mit dem Gerüst (2) fest verbundenen Lagern (10) frei drehbar gehalten sind, die die Achse (9) in Drehung halten, wobei ein erstes Zahnrad (11) mit der Achse (9) fest verbunden ist und einem zweiten Zahnrad (12) zugeordnet ist, das durch das Motor-Drehmittel (4) in Drehung mitgenommen wird.

3. Anordnung nach einem beliebigen der Ansprüche 1 und 2, bei dem die Motor-Drehmittel (4) durch einen an dem Gerüst (2) befestigten und mit einer bei verschwindendem Druck aktiven Bremse ausgestatteten pneumatischen Motor gebildet sind, wobei das Motor-Drehmittel (4) das zweite Zahnrad (12) mit Hilfe einer Kupplungsanordnung (13) mit pneumatisch gesteuerter Verzahnung und einem Zylinderrad-Untersetzungsgetriebe (14) in Drehung mitnimmt, wobei das zweite Zahnrad (12) mit Hilfe eines zweiten Satzes von Lagern (10) frei drehbar gehalten ist, die mit dem Gerüst (2) fest verbunden sind, und das Zylinderrad-Untersetzungsgetriebe (14) an den pneumatischen Motor mit Hilfe einer flexiblen Kupplung (15) gekoppelt ist.

4. Anordnung nach einem beliebigen der Ansprüche 1 bis 3, bei dem die Druckmittel (5) durch einen Pneumatikzylinder gebildet sind, der an einem seiner Enden frei schwenkbar an dem Gerüst (2) und am anderen Ende mit dem ersten Element (6) des Schienen- oder Straßenfahrzeugs verbunden ist, wobei der Zylinder mit dem ersten Element (6) des Schienen- oder Straßenfahrzeugs in der Weise zusammenwirkt, dass er darauf eine derart gerichtete Kraft ausübt, dass die resultierende, von den Antriebsrädern auf den Boden ausgeübte Kraft möglichst senkrecht zu der durch den Boden definierten Ebene ist.

5. Anordnung nach einem Beliebigen der Ansprüche 1 bis 4, bei dem das am Gerüst befestigte Ende des Zylinders mit dem Gerüst in verschiedenen longitudinalen Positionen über einen Multipositionsträger (20) fest verbunden ist, der longitudinal so angeordnet ist, dass er sich an die verschiedenen Positionen des ersten Elements (6) des Schienen- oder Straßenfahrzeugs anpassen kann, um eine befriedigende von den Antriebsrädern auf den Boden ausgeübte resultierende Kraft zu definieren.

6. Anordnung nach einem beliebigen der Ansprüche 1 bis 5, bei der die Haltemittel (7), die am Gerüst (2) befestigt sind und mit einem zweiten Element (8) des Schienen- oder Straßenfahrzeugs zusammenwirken, durch wenigstens einen an dem Ende des Gerüst befestigten Haltehaken gebildet sind.

7. Anordnung nach einem beliebigen der Ansprüche 1 bis 6, bei dem die Führungsmittel (16) durch zwei versenkbare Rollen gebildet sind.

8. Verfahren zur Anwendung einer Anordnung nach einem der Ansprüche 1 bis 7, gekennzeichnet durch:
- die manuelle Anbringung der Antriebs- und Manövriervorrichtung mit Hilfe einer teleskopischen Deichsel (18) und eines schwenkbaren Rades (19), das mit dem Gerüst fest verbunden ist, wobei die Antriebs- und Manövriervorrichtung in ausgerückter Position ist, um letztere in der Nähe des zu verschiebenden Fahrzeugs anzubringen;
- Ankoppeln der Antriebs- und Manövriervorrichtung an das Fahrzeug durch Schwenken der Vorrichtung nach vorn in Richtung auf das Fahrzeug, um die Haltemittel (7) mit dem zweiten Element (8) zu verbinden;
- das Anbringen der versenkbaren Führungsrollen;
- die Befestigung des freien Endes des Pneumatikzylinders am Ankoppelarm;
- das Einschalten der pneumatischen Versorgung des Motors, des Zylinders und der pneumatischen Kupplung; und
- das Steuern des Motors, des Zylinders und der pneumatischen Kupplung mit Hilfe eines pneumatischen Verteilers.

9. Anordnung, gebildet durch ein Schienen- oder Straßenfahrzeug und dessen Antriebsvorrichtung, mit:
- Mitnahmemitteln (1), die an einem Gerüst (2) befestigt sind und auf dem Boden (3) ruhen und unter der Einwirkung von Motor-Drehmitteln (4) drehbar sind, um eine longitudinale Bewegung des Gerüsts herbeizuführen;
- Druckmitteln (5A), die schwenkbar an dem Gerüst befestigt sind und mit einem ersten Element (6) des Schienen- oder Straßenfahrzeugs zusammenwirken, um eine ausreichende Haftung zwischen den Mitnahmemitteln und dem Boden herbeizuführen; und
- zusätzlichen Druckmitteln (21), die mit dritten Elementen (22) des Schienen- oder Straßenfahrzeugs zusammenwirken, um das Gerüst mit dem Straßen- oder Schienenfahrzeug fest zu verbinden,
dadurch gekennzeichnet, dass die zusätzlichen Druckmittel (21) an dem Gerüst befestigt sind, und dass die kombinierte Wirkung der Druckmittel (5A) und der zusätzlichen Druckmittel (21) die Erzeugung einer ausreichenden Haftung zwischen den Mitnahmemitteln und dem Boden erlaubt.

10. Anordnung nach Anspruch 9, bei dem das erste Druckmittel (5) durch einen ersten Zylinder und die zweiten Druckmittel (21) durch einen zweiten und einen dritten Zylinder gebildet sind, von denen ein Ende aus Haltehaken aufgebaut ist, wobei der zweite und der dritte pneumatische Zylinder auf beiden Seiten und vor dem ersten Zylinder angeordnet sind, und die ersten und zweiten Zylinder so zugeordnet sind, dass sie jeweils auf das erste Element 6 und die dritten Elemente 22 Kräfte ausüben, die so gerichtet sind, dass die von den Antriebsrädern auf den Boden ausgeübte resultierende Kraft möglichst senkrecht zu der vom Boden definierten Ebene ist.

11. Verfahren zur Anwendung einer Anordnung nach den Ansprüchen 9 oder 10, gekennzeichnet durch:
- die manuelle Anbringung der Antriebs- und Manövriervorrichtung mit Hilfe einer teleskopischen Deichsel (18) und eines mit dem Gerüst fest verbundenen schwenkbaren Rades (19), wobei die Antriebs- und Manövriervorrichtung in ausgerückter Position ist, um letztere in der Nähe des zu verschiebenden Fahrzeugs anzuordnen;
- das Ankoppeln der Antriebs- und Manövriervorrichtung an das Fahrzeug durch Einführen der Vorrichtung unter das Fahrzeug;
- die Anbringung der versenkbaren Führungsrollen;
- die Befestigung des freien Endes der Druckmittel am Kupplungsarm;
- die Befestigung der zusätzlichen Druckmittel unter den dritten Elementen des Schienen- oder Straßenfahrzeugs;
- das Einschalten der pneumatischen Versorgung des Motors, der Druckmittel und der pneumatischen Kupplung; und
- das Steuern des Motors, der Druckmittel und der pneumatischen Kupplung mit Hilfe eines pneumatischen Verteilers.

## Claims

1. A system consisting of a rail or road vehicle and its propulsion device, including:
- drive means (1) fixed to a frame (2) and resting on the ground (3), adapted to be turned by rotation drive means (4) to apply a longitudinal movement to said frame,
- pressure means (5) pivotably fixed at one end to said frame (2) and adapted to create sufficient adhesion between said drive means and said ground when they are supported at their other end, and
- holding means (7) for fastening said frame to said rail or road vehicle,
characterised in that:
- said pressure means (5) are fixed at their other end directly to a first member (6) of said rail or road vehicle,
- said holding means (7) are fixed to said frame (2) and cooperate with a second member (8) of the rail or road vehicle, and
- said frame (2) is fastened to said rail or road vehicle by the combined action of said holding means (7) and said pressure means (5), to the exclusion of any other means, the combined action of the pressure means (5) and the holding means (7) creating sufficient adhesion between said drive means and the ground.

2. A system according to claim 1 wherein the drive means (1) fixed to the frame (2) consist of at least one driving wheel keyed to the end of an axle (9) and are held so that they are free to rotate by a first set of bearings (10) fastened to the frame (2) rotatably holding the axle (9), and a first toothed wheel (11) is fastened to the axle (9) and is associated with a second toothed wheel (12) driven in rotation by said rotation drive means (4).

3. A system according to either claim 1 or claim 2 wherein the rotation drive means (4) consist of a pneumatic motor fixed to the frame (2) and equipped with a brake which is active when there is no pressure, said rotation drive means (4) drive rotation of said second toothed wheel (12) via a toothed clutch system (13) operated pneumatically and a gearbox (14) with cylindrical gears, said second toothed wheel (12) is rotatably held by a second set of bearings (10) fastened to the frame (2) and said gearbox (14) with cylindrical gears is coupled to the pneumatic motor by a flexible coupling (15).

4. A system according to any of claims 1 to 3 wherein the pressure means (5) consist of a pneumatic actuator pivotably fixed at one end to the frame (2) and at the other end to the first member (6) of the rail or road vehicle and said actuator co-operates with the first member (6) of the rail or road vehicle so as to apply to it a force directed so that the resultant force applied to the ground by the driving wheels is at best perpendicular to the plane defined by the ground.

5. A system according to any of claims 1 to 4 wherein the end of the actuator fixed to the frame is fastened to said frame at different longitudinal positions by means of a multiposition support (20) disposed longitudinally so that it is able to adapt to the different positions of the first member (6) of the rail or road vehicle to define a satisfactory resultant force applied to the ground by the driving wheels.

6. A system according to any of claims 1 to 5 wherein the holding means (7) fixed to the frame (2) and cooperating with a second member (8) of the rail or road vehicle consists of at least one holding hook fixed to the end of the frame.

7. A system according to any of claims 1 to 6 wherein the guide means (16) consist of two retractable wheels.

8. A method of using a system according to any of claims 1 to 7, characterised by:
- manually placing the propulsion and manoeuvring system by means of a telescopic rod (18) and a pivoting wheel (19) fastened to the frame, with the propulsion and manoeuvring system in a disengaged configuration, in order to place it near the vehicle to be moved;
- attaching the propulsion and manoeuvring system to said vehicle by tilting said system towards the front in the direction of said vehicle so as to fasten the holding means (7) to said second member (8);
- putting the retractable guide wheels into position;
- fixing the free end of the pneumatic actuator to the attachment arm;
- connecting the pneumatic supply of the pneumatic motor, the pneumatic actuator and the pneumatic clutch; and
- controlling the pneumatic motor, the pneumatic actuator and the pneumatic clutch by means of a pneumatic distributor.

9. A system comprising a rail or road vehicle and its propulsion system, including:
- drive means (1) fixed to a frame (2), resting on the ground (3) and adapted to be turned by rotation drive means (4) to apply a longitudinal movement to said frame;
- pressure means (5A) pivotably fixed to said frame and cooperating with a first member (6) of said rail or road vehicle to enable sufficient adhesion between said drive means and said ground; and
- additional pressure means (21) cooperating with third members (22) of said rail or road vehicle to fasten said frame to said rail or road vehicle,
characterised in that said additional pressure means (21) are fixed to said frame and the combined action of the pressure means (5A) and the additional pressure means (21) creates sufficient adhesion between said drive means and the ground.

10. A system according to claim 9 wherein the first pressure means (5) consist of a first actuator, the second pressure means (21) consist of second and third actuators one end of each of which consists of a holding hook, said second and third pneumatic actuators are on respective opposite sides of and in front of the first actuator, said first and second actuators are respectively adapted to apply to said first member (6) and to said third members (22) forces directed so that the resultant force supplied to the ground by the drive wheels is at best perpendicular to the plane defined by the ground.

11. A method of using a system according to claim 9 or claim 10 characterised by:
- manually placing the propulsion and manoeuvring system by means of a telescopic rod (18) and a pivoting wheel (19) fastened to the frame, with the propulsion and manoeuvring system in a disengaged configuration, in order to place it near the vehicle to be moved;
- attaching the propulsion and manoeuvring system to said vehicle by inserting said system under the vehicle,
- putting the retractable guide wheels into place;
- fixing the free end of the pressure means to the attachment arm;
- fixing the additional pressure means under the third members of the rail or road vehicle,
- connecting the pneumatic supply of the pneumatic motor, the pneumatic pressure means and the pneumatic clutch; and
- controlling the pneumatic motor, the pneumatic pressure means and the pneumatic clutch by means of a pneumatic distributor.
